# EUROPÄISCHE PATENTSCHRIFT

(11) **EP 3 217 055 B1**
(45) Veröffentlichungstag und Bekanntmachung des Hinweises auf die Patenterteilung: **08.05.2019**
(21) Anmeldenummer: 17160017.4
(22) Anmeldetag: 09.03.2017
(51) Int. Cl.: F16K 31/50, F16K 1/48, F16L 41/06, F16L 47/34

(54) **VENTILANBOHRARMATUR**
VALVE BORING FITTING
ROBINET AUTO-PERCEUR À SOUPAPE

(30) Priorität: 11.03.2016 DE 102016204010
(43) Veröffentlichungstag der Anmeldung: 13.09.2017
(73) Patentinhaber: agru Kunststofftechnik Gesellschaft m.b.H., 4540 Bad Hall (AT)
(72) Erfinder: BERNING, Joachim, 4522 Sierning (AT); KERSCHBAUMMAYR, Thomas, 4595 Waldneukirchen (AT); ORTMAIER, Markus, 4055 Pucking (AT)
(74) Vertreter: Burger, Hannes

(56) Entgegenhaltungen:
- DE-A1- 2 505 098
- FR-A- 1 377 703
- US-A- 3 162 211
- US-A- 3 198 206
- US-A- 6 012 475

## Beschreibung

Die Erfindung betrifft eine Ventilanbohrarmatur, wie dies im Anspruch 1 angegeben ist.

Aus der DE 103 20 997 B4 ist eine Ventilanbohrarmatur mit einem Gehäuse, einem auf einer Rohrleitung befestigbaren Sattel, einem Abzweigstutzen, einem Ventilkörper, welcher mit einem Außengewinde versehen ist, wobei das Außengewinde mit dem Gehäuse in Eingriff steht, und einem Schneidwerkzeug bekannt. Der Ventilkörper und das Schneidwerkzeug sind im Gehäuse über eine Antriebsspindel längsverschiebbar angeordnet. Die Antriebsspindel besteht aus einem aus dem Gehäuse herausgeführten Schaft und einer am gehäuseinneren Ende des Schafts angeordneten Hülse. Die Hülse ist zum Schaft und zum Ventilkörper so axial verschiebbar angeordnet, dass in einer oberen Endlage des Schneidwerkzeuges die Hülse nahezu vollständig im Ventilkörper aufnehmbar ist und gleichzeitig vollständig über den starren Teil des Schaftes gestülpt ist. Die Drehmomentenübertragung zwischen Schaft und Hülse, sowie zwischen Hülse und Ventilkörper erfolgt hierbei über eine zumindest bereichsweise polygonale Umfangskontur der jeweiligen Bauteile. Durch die Hülse ergibt sich eine teleskopierbare Antriebsspindel zur Drehmomentübertragung.

Aus der US 3 198 206 A ist eine Ventilanbohrarmatur bekannt, welche einen Ventilkörper aufweist, der mittels einem Kraftübertragungselement mit einem Gehäusedeckel koppelbar ist und mittels dem Gehäusedeckel verschoben werden kann.

Aus der US 3 162 211 A, der US 6 012 475 A, der FR 1 377 703 A und der DE 25 05 098 A1 sind weitere Ventilanbohrarmaturen bekannt.

Weiters sind aus dem Stand der Technik unzählige Ausführungen bekannt, in denen eine Antriebsspindel mit einer polygonalen Querschnittskontur, beziehungsweise mit einem Mitnehmerelement, eine direkte drehmomentübertragende Verbindung zu einem Ventilkörper bildet, in welchem eine entsprechende Ausnehmung zur Aufnahme des Drehmomentes vorgesehen ist. Auch in diesen Ausführungen ist der Ventilkörper relativ zur Antriebsspindel verschiebbar.

Die in der DE 103 20 997 B4 beschriebene Ausführung besitzt den Nachteil, dass der Aufbau der Antriebsspindel mit einer zwischengeschalteten Hülse komplex ist. Dadurch ergeben sich hohe Anforderungen an die Fertigung der zahlreichen Kleinteile. Auch der Zusammenbau der Ventilanbohrarmatur gestaltet sich aufgrund der Kleinteile als schwierig. Dadurch ist diese Ventilanbohrarmatur nicht nur relativ teuer in der Herstellung, sondern besteht aufgrund der vielen Kleinteile auch eine gewisse Fehleranfälligkeit im Hinblick auf die typischerweise langjährige Einsatz- bzw. Nutzungsdauer solcher Anbohrarmaturen.

Die weiteren aus dem Stand der Technik bekannten Ausführungen besitzen den Nachteil, dass der Ventilkörper eine große axiale Erstreckung aufweisen muss, um eine ausreichende Öffnungsstellung zum freien bzw. ungehinderten Durchfluss eines Mediums bewerkstelligen zu können. Dadurch ist die Bauhöhe einer derartigen Ventilanbohrarmatur unerwünscht groß.

Der vorliegenden Erfindung liegt die Aufgabe zugrunde, eine verbesserte Ventilanbohrarmatur zu schaffen.

Diese Aufgabe der Erfindung wird durch die Maßnahmen gemäß Anspruch 1 gelöst.

Erfindungsgemäß ist eine Ventilanbohrarmatur zum Anbringen auf einem Rohr ausgebildet. Die Ventilanbohrarmatur umfasst ein Gehäuse, das einen Hauptabschnitt mit einem Kopfbereich und einem Rohrmontagebereich, sowie einen Abzweigungsabschnitt für ein aus dem angebohrten Rohr austretendes Medium aufweist. Weiters einen Gehäusedeckel, welcher mittels einem am Kopfbereich des Gehäuses angeordneten Schraubgewinde auf das Gehäuse aufschraubbar ist. Außerdem einen Ventilkörper mit einem Schneidwerkzeug, wobei der Ventilkörper in Axialrichtung verschiebbar im Hauptabschnitt des Gehäuses angeordnet ist. Der Gehäusedeckel weist ein Kraftübertragungselement auf, mittels welchem der Gehäusedeckel mit dem Ventilkörper koppelbar ist und der Ventilkörper mittels dem Gehäusedeckel verschiebbar ist.

Die erfindungsgemäße Ausbildung der Ventilanbohrarmatur weist den Vorteil auf, dass der Ventilkörper bzw. das Gehäuse der Ventilanbohrarmatur möglichst einfach aufgebaut sein können und somit kostengünstig herzustellen sind. Darüber hinaus können durch den einfachen Aufbau der Ventilanbohrarmatur Fehlfunktionen bzw. mögliche Herstellungsfehler weitestgehend vermieden werden. Dadurch, dass der Ventilkörper mit dem Gehäusedeckel koppelbar ist, kann der Ventilkörper mittels dem Gehäusedeckel verschoben werden. Aus diesem Grund wird zum Verschieben des Ventilkörpers kein eigenes Gewinde benötigt, welches beispielsweise im Inneren des Gehäuses angeordnet sein müsste, sondern kann mittels der Verschraubung zum Befestigen des Gehäusedeckels auch gleichzeitig der Ventilkörper verschoben werden.

Weiters ist vorgesehen, dass das Kraftübertragungselement als zentral im Gehäusedeckel angeordneter Stift ausgebildet ist, welcher aus dem Gehäusedeckel in das Innere des Gehäuses einragt, wobei im Ventilkörper eine Bohrung ausgebildet ist, welche mit dem Stift korrespondiert. Von Vorteil ist hierbei, dass durch diese Maßnahme das Kraftübertragungselement als möglichst einfaches Bauteil am Gehäusedeckel ausgebildet sein kann und in möglichst einfacher Weise mit dem Ventilkörper zusammenwirken kann.

Ferner ist vorgesehen, dass der Stift an dessen vom Gehäusedeckel abgewandter Seite zumindest einen Mitnehmerzapfen aufweist. Mit einem Mitnehmerzapfen kann eine formschlüssige Verbindung zwischen Gehäusedeckel und Ventilkörper realisiert werden. Der Mitnehmerzapfen ist vorzugsweise im rechten Winkel zum Stift angeordnet.

Darüber hinaus ist vorgesehen, dass in der Bohrung im Ventilkörper zumindest eine T-Förmige Nut ausgebildet ist, welche Nut einen in Axialrichtung verlaufenden Einführbereich aufweist und einen in Umfangrichtung verlaufenden und an den Einführbereich anschließenden Arretierbereich aufweist, wobei der Mitnehmerzapfen durch axialen Einschub in den Einführbereich eingesetzt wird und durch anschließende Verdrehung des Stiftes axial gesichert wird. Von Vorteil ist hierbei, dass der Mitnehmerzapfen einfach in die T-förmige Nut eingesetzt werden kann. Durch Verdrehung des Stiftes kann erreicht werden, dass der Mitnehmerzapfen im Arretierbereich formschlüssig aufgenommen wird und dadurch der Ventilkörper mittels dem Gehäusedeckel in beiden axialen Richtungen verschoben werden kann. Außerdem kann durch Ausbildung der T-förmigen Nut ein Drehmoment vom Gehäusedeckel in den Ventilkörper eingebracht werden.

Darüber hinaus ist vorgesehen, dass in der Bohrung im Ventilkörper zumindest eine sich in Axialrichtung der Bohrung erstreckende und über die Länge der Bohrung verlaufende Aufnahmenut ausgebildet ist, in welcher der Mitnehmerzapfen axial verschiebbar ist. Die Aufnahmenut kann dazu dienen, um den Gehäusedeckel auf das Gehäuse aufschrauben zu können, ohne dabei den Ventilkörper mittels dem Gehäusedeckel insbesondere mittels der Mitnehmerzapfen zu verschieben. Dies kann dadurch erreicht werden, dass die Mitnehmerzapfen in Axialrichtung in der Aufnahmenut verschiebbar sind, ohne dass dabei eine axiale Kraftübertragung zwischen Ventilkörper und Mitnehmerzapfen stattfindet.

Gemäß einer Weiterbildung ist vorgesehen, dass die Aufnahmenut in einem Winkel zur T-Förmigen Nut versetzt angeordnet ist. Von Vorteil ist hierbei, dass in einer ersten Winkelstellung des Gehäusedeckels der Mitnehmerzapfen in die Aufnahmenut eingesetzt werden kann und bei Herausnahme des Mitnehmerzapfens aus der Aufnahmenut und anschließender Winkelverdrehung des Gehäusedeckels der Mitnehmerzapfen in die T-förmige Nut eingesetzt werden kann, um den Ventilkörper mittels dem Gehäusedeckel verschieben zu können.

Ferner kann es zweckmäßig sein, wenn im Kopfbereich des Gehäuses ein Ansatz ausgebildet ist, welcher als Anschlag für den Ventilkörper wirkt. Von Vorteil ist hierbei, dass durch den Anschlag verhindert werden kann, dass der Ventilkörper unbeabsichtigt aus dem Gehäuse herausgezogen wird.

Darüber hinaus kann vorgesehen sein, dass im Gehäuse ausgehend vom Rohrmontagebereich eine Führungsbohrung zur Aufnahme des Ventilkörpers ausgebildet ist. Eine derartige Führungsbohrung kann einfach hergestellt werden und kann darüber hinaus mit dem Ventilkörper zusammenwirken, um eine Abdichtung bilden zu können.

Weiters kann vorgesehen sein, dass der Ventilkörper zumindest eine Dichtung aufweist, welche an der Außenseite des Ventilkörpers angeordnet ist und mit der Führungsbohrung im Gehäuse zusammenwirkt. Von Vorteil ist hierbei, dass eine derartige Dichtung dazu dienen kann, dass der Ventilkörper verschiebbar am Gehäuse aufgenommen ist und trotzdem gewährleistet ist, dass das Medium nicht aus der Ventilanbohrarmatur austritt.

Gemäß einer besonderen Ausprägung ist es möglich, dass der Ventilkörper und das Schneidwerkzeug einteilig ausgebildet sind. Dies bringt insbesondere die Vorteile mit sich, dass der Ventilkörper und das Schneidwerkzeug nicht etwa durch eine stoffschlüssige Verbindung miteinander verbunden werden müssen. Somit können die Herstellkosten zur Herstellung der Ventilanbohrarmatur möglichst gering gehalten werden.

Zum besseren Verständnis der Erfindung wird diese anhand der nachfolgenden Figuren näher erläutert.

Es zeigen jeweils in stark vereinfachter, schematischer Darstellung:
Es zeigen jeweils in stark vereinfachter, schematischer Darstellung:
- Fig. 1: ein Ausführungsbeispiel einer Anbohrarmatur in einer perspektivischen Darstellung;
- Fig. 2: ein Ausführungsbeispiel einer Anbohrarmatur in einer Schnittdarstellung gemäß der Schnittlinie II-II in Fig. 1;
- Fig. 3: ein weiteres Ausführungsbeispiel der Anbohrarmatur in einer Schnittdarstellung gemäß der Schnittlinie II-II in Fig. 1;
- Fig. 4: eine perspektivische Ansicht eines Ausführungsbeispiels eines Ventilkörpers;
- Fig. 5: eine perspektivische Ansicht eines Ausführungsbeispiels eines Gehäusedeckels.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

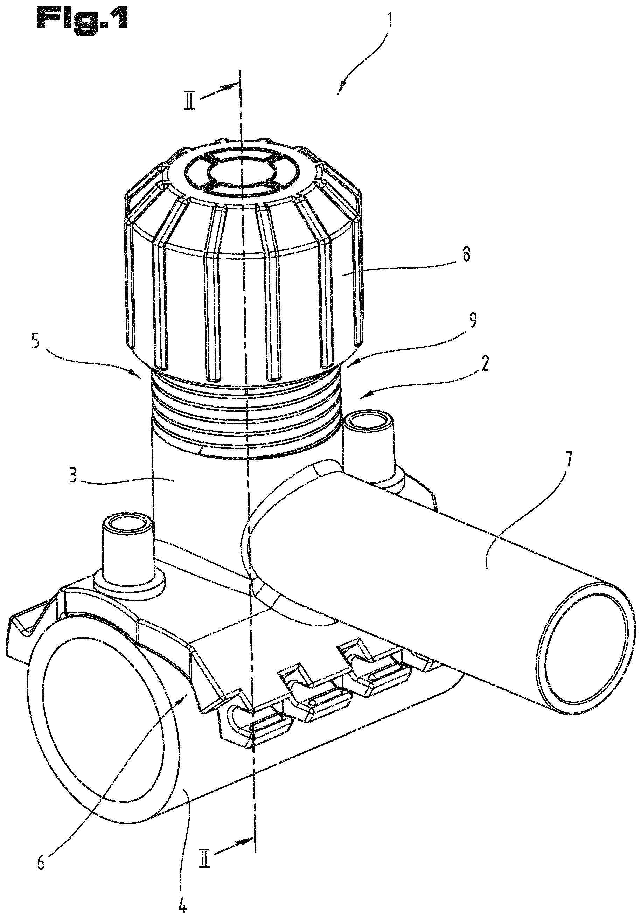

Fig. 1 zeigt eine perspektivische Ansicht eines Ausführungsbeispiels einer Ventilanbohrarmatur 1. Die in dieser Figur dargestellte Ventilanbohrarmatur 1 umfasst ein Gehäuse 2 welches einen Hauptabschnitt 3 aufweist, welcher zur Befestigung der Ventilanbohrarmatur 1 an einem anzubohrenden Rohr 4 dient. Der Hauptabschnitt 3 des Gehäuses 2 weist einen Kopfbereich 5 und einen Rohrmontagebereich 6 auf, wobei der Rohrmontagebereich 6 zum Anlegen des Gehäuses 2 am Rohr 4 vorgesehen ist. Der Rohrmontagebereich 6 des Hauptabschnittes 3 kann dabei eine schalenförmige, insbesondere halbschalenförmige Formgebung aufweisen, welche in deren Kontur an das Rohr 4 angepasst sein kann. Weiters umfasst das Gehäuse 2 einen Abzweigungsabschnitt 7, an welchem eine Rohrleitung, welche zum Hausanschluss führen kann, befestigt werden kann. Der Abzweigungsabschnitt 7 dient dazu, um ein im Rohr 4 geführtes Medium durch die den Hauptabschnitt 3 und über den damit strömungsverbundenen Abzweigungsabschnitt 7 in einen Hausanschluss einleiten zu können.

Insbesondere kann vorgesehen sein, dass der Abzweigungsabschnitt 7, wie dargestellt in einem Winkel von 90° auf den Hauptabschnitt 3 angebracht ist, bzw. mit anderen Worten ausgedrückt, dass eine Längsachse des Abzweigungsabschnittes 7 im rechten Winkel auf eine Längsachse des Hauptabschnittes 3 steht.

In einem weiteren, nicht dargestellten Ausführungsbeispiel kann auch vorgesehen sein, dass der Abzweigungsabschnitt 7 in einem beliebigen Winkel zum Hauptabschnitt 3 angeordnet ist.

Der Hauptabschnitt 3 der Ventilanbohrarmatur 1 ist vorzugsweise so ausgebildet, dass dieser mittels einer einfachen Verbindung, wie etwa eine Schraubverbindung, mittels einer Rohrschelle am anzubohrenden Rohr 4 befestigt werden kann. Es kann jedoch auch vorgesehen sein, dass der Hauptabschnitt 3 mittels einer stofflichen Verbindung, etwa einer Schweißverbindung, am anzubohrenden Rohr 4 befestigt wird. Weiters kann vorgesehen sein, dass im Rohrmontagebereich 6 des Hauptabschnittes 3 ein Heizdraht verlegt ist, mittels welchem der Rohrmontagebereich 6 unter Zuführung von Strom zumindest teilweise aufgeschmolzen werden kann und dadurch eine stoffschlüssige Verbindung zwischen Gehäuse 2 und Rohr 4 geschaffen werden kann.

Weiters kann ein Gehäusedeckel 8 vorgesehen sein, welcher auf den Kopfbereich 5 des Hauptabschnittes 3 des Gehäuses 2 aufgeschraubt sein kann, um ein unerwünschtes Eintreten von Fremdkörpern in das Innere des Gehäuses 2 zu unterbinden.

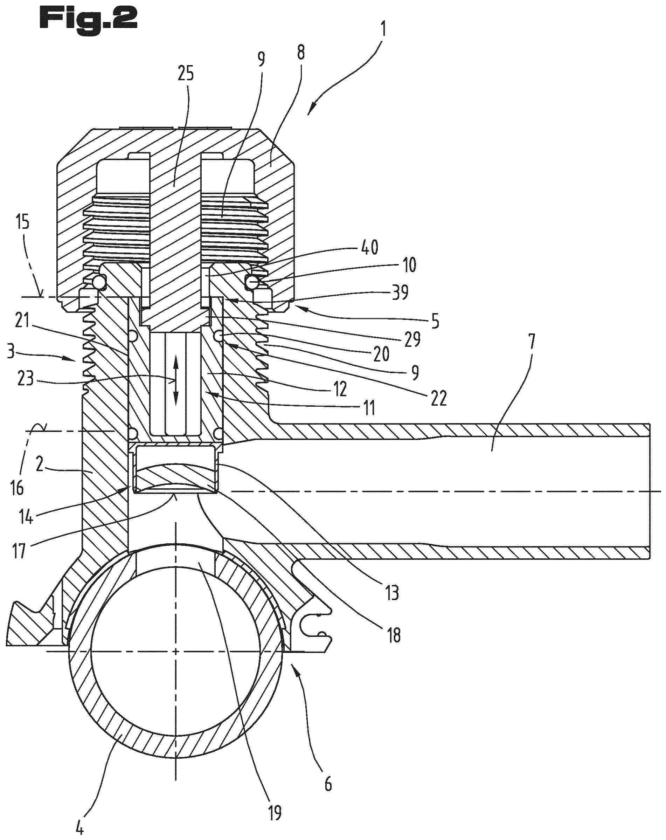

Fig. 2 zeigt einen Schnitt durch eine Ventilanbohrarmatur 1 gemäß den Schnittlinien II-II in Fig. 1.

Im Hauptabschnitt 3 des Gehäuses 2 ist ein Hohlraum 11 ausgebildet, in welchem ein Ventilkörper 12 aufgenommen ist. Der Hohlraum 11 kann in Form einer Längsbohrung ausgebildet sein, welche sich ausgehend vom Kopfbereich 5 bis zum Rohrmontagebereich 6 erstrecken kann.

Der im Gehäuse 2 aufgenommene Ventilkörper 12 kann ein Schneidwerkzeug 13 aufweisen, welches zum Anbohren des Rohres 4 dient. Beim Anbohren des Rohres wird das Schneidwerkzeug 13 auf das Rohr 4 angedrückt und vom Schneidwerkzeug 13 ein kreisförmiger Teilabschnitt des Rohrmantels herausgetrennt. Dieser kreisförmig aus dem Rohrmantel herausgeschnittene Teilabschnitt verbleibt dabei bevorzugt im Inneren des hohlzylindrischen Schneidwerkzeuges 13. Zur sicheren Halterung des ausgeschnittenen Teilabschnittes können an der Innenmantelfläche des Schneidwerkzeuges 13 rillenartige bzw. gewindeförmige Erhebungen ausgebildet sein.

Wie aus Figur 2 ersichtlich kann vorgesehen sein, dass das Schneidwerkzeug 13 als Insert 14 ausgebildet ist, welches im Ventilkörper 12 aufgenommen ist. Das Insert 14 kann beispielsweise durch eine formschlüssige Verbindung oder durch eine stoffschlüssige Verbindung mit dem Ventilkörper 12 verbunden sein. Insbesondere kann vorgesehen sein, dass das Insert 14 respektive das Schneidwerkzeug 13 aus einem ersten Werkstoff gebildet sein kann und der restliche Ventilkörper 12 aus einem zweiten Werkstoff gebildet sein kann, wobei der erste Werkstoff des Inserts 14 eine größere Festigkeit aufweisen kann, als der zweite Werkstoff des Ventilkörpers 12. Beispielsweise ist es denkbar, dass das Insert 14 aus einem metallischen Werkstoff, wie etwa Messing, Kupfer, oder auch Stahl, insbesondere einem nicht rostenden Stahl gefertigt ist. Der Ventilkörper 12 kann beispielsweise aus einem Kunststoffmaterial, wie etwa einem thermoplastischen Kunststoff, bevorzugt Polyethylen gefertigt sein.

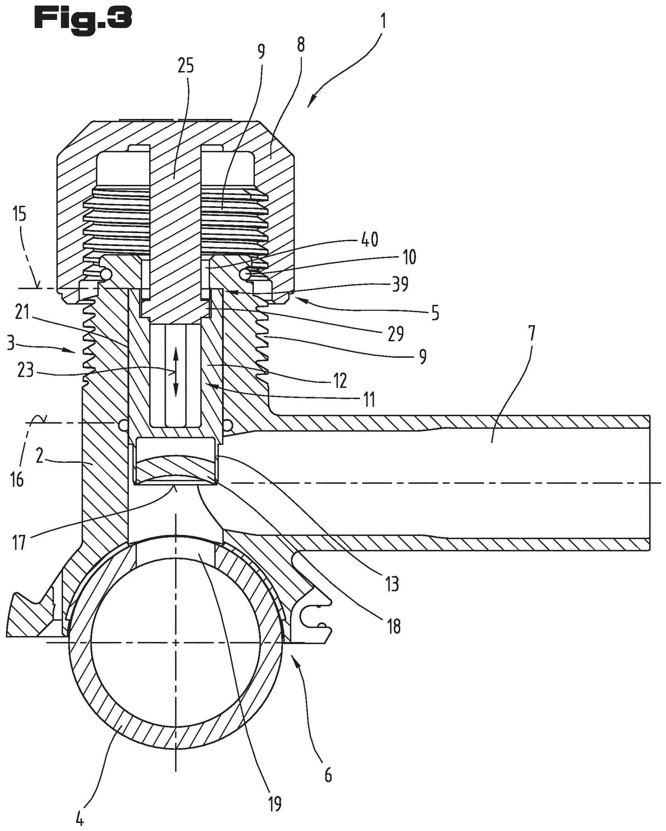

In einer weiteren, in Fig. 3 dargestellten Ausführungsvariante kann vorgesehen sein, dass der Ventilkörper 12 einteilig aus einem homogenen Werkstoff ausgebildet ist und das Schneidwerkzeug 13 daher direkt im Ventilkörper 12 ausgebildet ist.

In der Figur 2 ist die Ventilanbohrarmatur 1 in einer Stellung dargestellt, in der sich der Ventilkörper 12 mit dem daran angebrachten Schneidwerkzeug 13 in einer oberen Endlage 15 bzw. der Offenstellung der Ventilanbohrarmatur 1 befindet.

Wird der Ventilkörper 12 nach dem Montieren der Ventilanbohrarmatur 1 am anzubohrenden Rohr 4 zum ersten Mal aus seiner oberen Endlage 15, auch Offenstellung, in eine untere Endlage 16, auch Geschlossenstellung, bewegt, so schneidet eine Schneidkante 17 des Schneidwerkzeuges 13 einen Pfropfen 18 aus dem anzubohrenden Rohr 4. Dieser Pfropfen 18 wird innerhalb des Schneidwerkzeuges 13 aufgenommen. Gleichzeitig ist, wenn sich der Ventilkörper 12 in der unteren Endlage 16 befindet, die Strömungsverbindung vom Rohr in den Abzweigungsabschnitt 7 bzw. zum Hausanschluss unterbrochen und abgedichtet.

Beim Verstellen des Ventilkörpers 12 von der unteren Endlage 16 in die obere Endlage 15, was wie in weiterer Folge noch genauer beschrieben durch Verschieben des Ventilkörpers 12 bewerkstelligt wird, wird das im anzubohrenden Rohr 4 hergestellte Loch 19 zur Hindurchströmung eines Mediums freigegeben. Somit ist eine Durchströmung vom Hauptabschnitt 3 zum Abzweigungsabschnitt 7, insbesondere zu einem Hauswasseranschluss, hergestellt.

Wie aus Fig. 2 ersichtlich, kann vorgesehen sein, dass im Ventilkörper 12 ein oder mehrere Dichtringe 20 aufgenommen sind, welche zusammen mit einer Führungsbohrung 21 in welcher der Ventilkörper 12 aufgenommen ist, eine Dichtanordnung 22 bilden. Insbesondere kann vorgesehen sein, dass der Ventilkörper 12 in Axialrichtung 23 verschiebbar in der Führungsbohrung 21 aufgenommen ist. Durch die Anordnung der Dichtringe 20 am Ventilkörper 12 kann erreicht werden, dass in jeder Position des Ventilkörpers 12 die Dichtringe 20 mit der Führungsbohrung 21 zusammenwirken und ein Ausströmen des Mediums unterbunden wird.

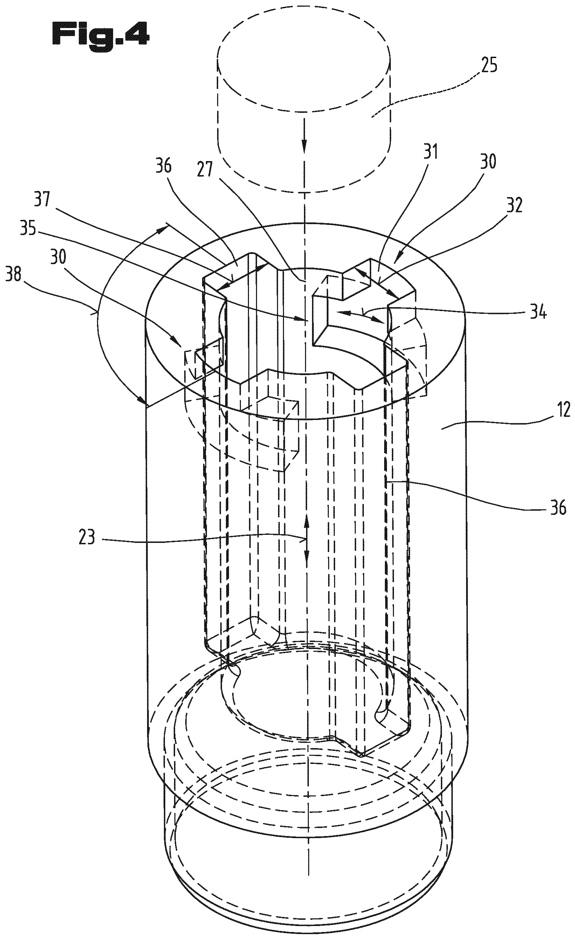

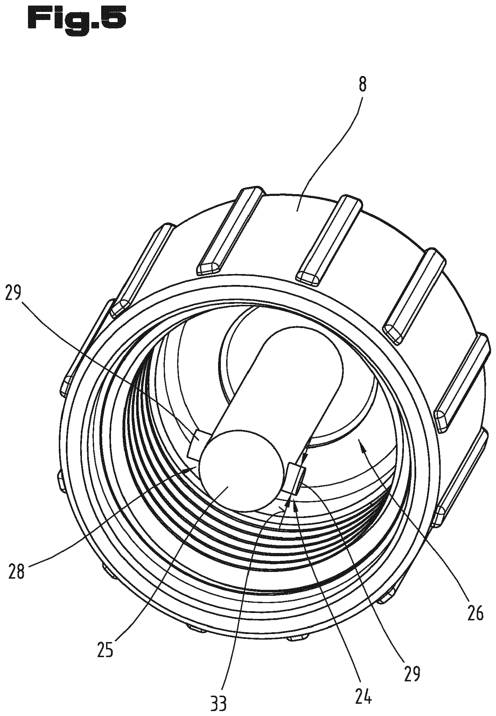

Fig. 4 zeigt eine perspektivische Ansicht des Ventilkörpers 12, wobei die verdeckten Kanten des Ventilkörpers 12 strichliert dargestellt sind und den Innenaufbau des Ventilkörpers 12 erkennen zu können. Fig. 5 zeigt eine perspektivische Ansicht des Gehäusedeckels 8.

Die weitere Funktionsweise der Ventilanbohrarmatur 1 wird auf Basis einer Zusammenschau der Figuren 2, 4 und 5 erklärt. Zum Verschieben des Ventilkörpers 12 in Axialrichtung 23 ist vorgesehen, dass der Gehäusedeckel ein Kraftübertragungselement 24 aufweist, mittels welchem der Gehäusedeckel 8 mit dem Ventilkörper 12 koppelbar ist. Im dargestellten Ausführungsbeispiel ist das Kraftübertragungselement 24 durch einen Stift 25 gebildet, welcher an einer Innenseite 26 des Gehäusedeckels 8 angeordnet ist. Insbesondere ist vorgesehen, dass der Stift 25 in das Innere des Gehäuses 2 einragt wenn der Gehäusedeckel 8 auf das Gehäuse 2 aufgeschraubt ist. Im Ventilkörper 12 ist eine Bohrung 27 vorgesehen, welche mit dem Stift 25 korrespondiert und in welche der Stift 25 eingeschoben werden kann. Insbesondere ist es zweckmäßig, wenn zwischen dem Außendurchmesser des Stiftes 25 und dem Innendurchmesser der Bohrung 27 eine Spielpassung ausgebildet ist, sodass der Stift 25 leichtgängig in die Bohrung 27 eingeschoben werden kann. Weiters kann vorgesehen sein, dass der Stift 25 an der vom Gehäusedeckel 8 abgewandten Seite 28 einen oder mehrere Mitnehmerzapfen 29 aufweist. Im hier dargestellten Ausführungsbeispiel sind am Stift 25 zwei Mitnehmerzapfen 29 angeordnet, wobei die Mitnehmerzapfen 29 einander gegenüberliegend am Stift 25 platziert sind.

Zum axialen Arretieren des Ventilkörpers 12 mit dem Gehäusedeckel 8 kann vorgesehen sein, dass in der Bohrung 27 des Ventilkörpers 12 eine bzw. mehrere T-förmige Nuten 30 ausgebildet sind. Insbesondere ist es zweckmäßig, wenn pro Mitnehmerzapfen 29 eine T-förmige Nut 30 ausgebildet ist. Die T-förmige Nut 30 weist einen Einführbereich 31 auf, welcher sich in Axialrichtung 23 des Ventilkörpers 12 erstreckt. Der Einführbereich 31 weist vorzugsweise eine Breite 32 auf, welche in etwa dem Durchmesser 33 des Mitnehmerzapfens 29 entspricht. Die T-förmige Nut 30 weist darüber hinaus einen sich in Umfangsrichtung 34 erstreckenden Arretierbereich 35 auf. Der Arretierbereich 35 schließt direkt an den Einführbereich 31 an. Durch die T-förmige Ausnehmung, welche sich zwischen Einführbereich 31 und Arretierbereich 35 ergibt, kann der Mitnehmerzapfen 29 formschlüssig in der T-förmigen Nut 30 aufgenommen werden und insbesondere im Arretierbereich 35 gesichert werden, sodass eine axiale Verschiebung zwischen dem Stift 25 und dem Ventilkörper 12 unterbunden werden kann.

Zum Koppeln des Gehäusedeckels 8 mit dem Ventilkörper 12 werden die zentralen Längsachsen des Gehäusedeckels 8 und des Ventilkörpers 12 kongruent zueinander ausgerichtet, wobei der Gehäusedeckel 8 an jener Seite des Ventilkörpers 12 platziert wird, an welcher die T-förmige Nut 30 ausgebildet ist. Der Stift 25 des Gehäusedeckels 8 ist dabei dem Ventilkörper 12 zugewandt. Der Gehäusedeckel 8 wird bezüglich dessen zentraler Längsachse derart gedreht, dass die Mitnehmerzapfen 29 deckungsgleich mit dem Einführbereich 31 der T-förmigen Nut 30 stehen und der Gehäusedeckel 8 in Axialrichtung 23 zum Ventilkörper 12 hin verschoben werden kann, sodass die Mitnehmerzapfen 29 in den Einführbereich 31 der T-förmigen Nut 30 eingeschoben werden.

Diese axiale Verschiebebewegung geht dabei so weit, bis die Mitnehmerzapfen 29 im Arretierbereich 35 des Ventilkörpers 12 aufgenommen sind. Anschließend wird der Gehäusedeckel 8 bezüglich dessen zentraler Längsachse entweder nach rechts oder nach links verdreht, sodass die Mitnehmerzapfen 29 im Arretierbereich 35 des Ventilkörpers 12 formschlüssig aufgenommen sind. Dadurch kann eine axiale Verriegelung zwischen Gehäusedeckel 8 und Ventilkörper 12 erreicht werden. Insbesondere kann vorgesehen sein, dass der Gehäusedeckel 8 nach dem Koppeln mit dem Ventilkörper 12 auf das Gehäuse 2 aufgeschraubt wird und durch die axiale Verstellbewegung des Gehäusedeckels 8 beim Verschraubvorgang der Ventilkörper 12 in Axialrichtung 23 mit dem Gehäusedeckel 8 mitbewegt wird. Somit kann der Ventilkörper 12 mittels dem Gehäusedeckel 8 zwischen seiner oberen Endlage 15 und seiner unteren Endlage 16 verschoben werden.

Weiters kann vorgesehen sein, dass in der Bohrung 27 des Ventilkörpers 12 zumindest eine sich in Axialrichtung 23 erstreckende Aufnahmenut 36 ausgebildet ist. Die Aufnahmenut 36 weist eine Breite 37 auf, welche ebenfalls mit dem Durchmesser 33 des Mitnehmerzapfens 29 korrespondiert. Insbesondere ist vorgesehen, dass der Mitnehmerzapfen 29 über die gesamte Länge in die Aufnahmenut 36 eingeschoben werden kann. Dies ist beispielsweise notwendig, wenn sich der Ventilkörper 12 in seiner oberen Endlage 15 befindet und in dieser verbleiben soll, wobei der Gehäusedeckel 8 auf das Gehäuse 2 aufgeschraubt werden soll. In diesem Fall wird der Stift 25, insbesondere die Mitnehmerzapfen 29 derart in den Ventilkörper 12 eingeführt, dass die Mitnehmerzapfen 29 in der Aufnahmenut 36 aufgenommen werden. Wird nun der Gehäusedeckel 8 auf das Gehäuse 2 aufgeschraubt, so dreht sich der Ventilkörper 12 zwar durch die formschlüssige Verbindung zwischen Mitnehmerzapfen 29 und Aufnahmenut 36 mit dem Gehäusedeckel mit, jedoch findet keine axiale Sicherung bzw. Arretierung zwischen dem Ventilkörper 12 und dem Gehäusedeckel 8 statt, sodass der Ventilkörper 12 in seiner oberen Endlage 15 verbleibt und der Stift 25 immer weiter in das Innere der Bohrung 27 eingeschoben wird.

Wie aus Fig. 4 ersichtlich, ist es zweckmäßig, wenn die T-förmige Nut 30 und die Aufhahmenut 36 in einem Winkel 38 zueinander angeordnet sind. Somit kann durch Verdrehung des Gehäusedeckels 8, wenn sich dieser außerhalb des Ventilkörpers 12 befindet, erreicht werden, dass die Mitnehmerzapfen 29 entweder in die T-förmige Nut 30 oder in die Aufnahmenut 36 eingesetzt werden können.

Wie aus Fig. 2 weiters ersichtlich, kann vorgesehen sein, dass im Kopfbereich 5 des Hauptabschnittes 3 des Gehäuses 2 ein Ansatz 39 ausgebildet ist, durch welchen verhindert wird, dass der Ventilkörper 12 in Axialrichtung 23 aus dem Hauptabschnitt 3 des Gehäuses 2 herausgezogen werden kann. Der Ansatz 39 kann beispielsweise dadurch ausgebildet sein, dass im Kopfbereich 5 eine Durchgangsbohrung 40 ausgebildet sein, welche einen kleinen Durchmesser aufweist als die Führungsbohrung 21. Insbesondere ist es vorteilhaft, wenn die Führungsbohrung 21 von der Seite des Rohrmontagebereiches 6 in den Hauptabschnitt 3 des Gehäuses 2 eingebracht ist.

Beim Zusammenbau der Ventilanbohrarmatur 1 kann vorgesehen sein, dass der Ventilkörper 12 von der Seite des Rohrmontagebereiches 6 in die Führungsbohrung 21 eingesetzt wird. Anschließend kann die Ventilanbohrarmatur 1 am Rohr 4 befestigt werden, wobei durch die Ausgestaltung der Führungsbohrung 21 bzw. des Ansatzes 39 ein Herausfallen des Ventilkörpers 12 unterbunden werden kann.

In der Fig. 3 ist eine weitere und gegebenenfalls für sich eigenständige Ausführungsform der Ventilanbohrarmatur 1 gezeigt, wobei wiederum für gleiche Teile gleiche Bezugszeichen bzw. Bauteilbezeichnungen wie in der vorangegangenen Fig. 2 verwendet werden. Um unnötige Wiederholungen zu vermeiden, wird auf die detaillierte Beschreibung in der vorangegangenen Fig. 2 in Verbindung mit den Figuren 4 und 5 hingewiesen bzw. Bezug genommen.

Wie in Fig. 3 ersichtlich kann auch vorgesehen sein, dass das Schneidwerkzeug 13 direkt am Ventilkörper 12 ausgebildet ist.

Unabhängig davon kann vorgesehen sein, dass der Dichtring nicht am Ventilkörper 12 angeordnet ist, sondern dass der Dichtring im Gehäuse 2 angeordnet ist und auf den Ventilkörper 12 wirkt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Ventilanbohrarmatur | 30 | T-Förmige Nut |
| 2 | Gehäuse | 31 | Einführbereich |
| 3 | Hauptabschnitt | 32 | Breite Einführbereich |
| 4 | Rohr | 33 | Durchmesser Mitnehmerzapfen |
| 5 | Kopfbereich | 34 | Umfangrichtung |
| 6 | Rohrmontagebereich | 35 | Arretierbereich |
| 7 | Abzweigungsabschnitt | 36 | Aufnahmenut |
| 8 | Gehäusedeckel | 37 | Breite Aufnahmenut |
| 9 | Schraubgewinde | 38 | Winkel |
| 10 | Dichtung Gehäusedeckel | 39 | Ansatz |
| 11 | Hohlraum | 40 | Durchgangsbohrung |
| 12 | Ventilkörper | | |
| 13 | Schneidwerkzeug | | |
| 14 | Insert | | |
| 15 | obere Endlage | | |
| 16 | untere Endlage | | |
| 17 | Schneidkante | | |
| 18 | Pfropfen | | |
| 19 | Loch | | |
| 20 | Dichtring Ventilkörper | | |
| 21 | Führungsbohrung | | |
| 22 | Dichtanordnung | | |
| 23 | Axialrichtung | | |
| 24 | Kraftübertragungselement | | |
| 25 | Stift | | |
| 26 | Innenseite Gehäusedeckel | | |
| 27 | Bohrung | | |
| 28 | vom Gehäusedeckel abgewandte Seite | | |
| 29 | Mitnehmerzapfen | | |

## Patentansprüche

1. Ventilanbohrarmatur (1) zum Anbringen auf einem Rohr (4), die Ventilanbohrarmatur (1) umfassend:
ein Gehäuse (2), das einen Hauptabschnitt (3) mit einem Kopfbereich (5) und einem Rohrmontagebereich (6), sowie einen Abzweigungsabschnitt (7) für ein aus dem angebohrten Rohr (4) austretendes Medium aufweist;
ein Gehäusedeckel (8), welcher mittels einem am Kopfbereich (5) des Gehäuses (2) angeordneten Schraubgewinde (9) auf das Gehäuse (2) aufschraubbar ist;
einen Ventilkörper (12) mit einem Schneidwerkzeug (13), wobei der Ventilkörper (12) in Axialrichtung (23) verschiebbar im Hauptabschnitt (3) des Gehäuses (2) angeordnet ist,
wobei der Gehäusedeckel (8) ein Kraftübertragungselement (24) aufweist, mittels welchem der Gehäusedeckel (8) mit dem Ventilkörper (12) koppelbar ist und der Ventilkörper (12) mittels dem Gehäusedeckel (8) verschiebbar ist, wobei das Kraftübertragungselement (24) als zentral im Gehäusedeckel (8) angeordneter Stift (25) ausgebildet ist,
welcher aus dem Gehäusedeckel (8) in das Innere des Gehäuses (2) einragt, wobei im Ventilkörper (12) eine Bohrung (27) ausgebildet ist, welche mit dem Stift (25) korrespondiert, wobei der Stift (25) an dessen vom Gehäusedeckel (8) abgewandter Seite (28) zumindest einen Mitnehmerzapfen (29) aufweist, wobei in der Bohrung (27) im Ventilkörper (12) zumindest eine sich in Axialrichtung (23) der Bohrung (27) erstreckende und über die Länge der Bohrung (27) verlaufende Aufnahmenut (36) ausgebildet ist, in welcher der Mitnehmerzapfen (29) axial verschiebbar ist, **dadurch gekennzeichnet, dass** in der Bohrung (27) im Ventilkörper (12) zumindest eine T-Förmige Nut (30) ausgebildet ist, welche Nut (30) einen in Axialrichtung (23) verlaufenden Einführbereich (31) aufweist und einen in Umfangrichtung (34) verlaufenden und an den Einführbereich (31) anschließenden Arretierbereich (35) aufweist, wobei der Mitnehmerzapfen (29) durch axialen Einschub in den Einführbereich (31) eingesetzt wird und durch anschließende Verdrehung des Stiftes (25) axial gesichert wird, wobei die Aufnahmenut (36) in einem Winkel (38) zur T-Förmigen Nut (30) versetzt angeordnet ist.

2. Ventilanbohrarmatur nach Anspruch 1, **dadurch gekennzeichnet, dass** im Kopfbereich (5) des Gehäuses (2) ein Ansatz (39) ausgebildet ist, welcher als Anschlag für den Ventilkörper (12) wirkt.

3. Ventilanbohrarmatur nach einem der vorhergehenden Ansprüche, **dadurch gekennzeichnet, dass** im Gehäuse (2) ausgehend vom Rohrmontagebereich (6) eine Führungsbohrung (21) zur Aufnahme des Ventilkörpers (12) ausgebildet ist.

4. Ventilanbohrarmatur nach Anspruch 3, **dadurch gekennzeichnet, dass** der Ventilkörper (12) zumindest eine Dichtung (20) aufweist, welche an der Außenseite des Ventilkörpers (12) angeordnet ist und mit der Führungsbohrung (21) im Gehäuse (2) zusammenwirkt.

5. Ventilanbohrarmatur nach einem der vorhergehenden Ansprüche, **dadurch gekennzeichnet, dass** der Ventilkörper (12) und das Schneidwerkzeug (13) einteilig ausgebildet sind.

## Claims

1. A valve boring fitting (1) for attaching to a pipe (4), the valve boring fitting (1) comprising:
a housing (2) which exhibits a main portion (3) with a head region (5) and a pipe assembly region (6) and also a branch portion (7) for a medium leaving the bored pipe (4);
a housing cover (8) which can be screwed onto the housing (2) by means of a screw thread (9) arranged on the head region (5) of the housing (2);
a valve body (12) with a cutting tool (13), wherein the valve body (12) is arranged in the main portion (3) of the housing (2) in a displaceable manner in the axial direction (23), wherein the housing cover (8) has a force-transmitting element (24), by means of which the housing cover (8) can be coupled to the valve body (12) and the valve body (12) is displaceable by means of the housing cover (8), wherein the force-transmitting element (24) is configured as a pin (25) arranged centrally in the housing cover (8), which projects from the housing cover (8) into the inside of the housing (2), wherein a bore (27) is formed in the valve body (12) which corresponds to the pin (25), wherein the pin (25) has at least one driver pin (29) on the side (28) thereof facing away from the housing cover (8), wherein in the bore (27) in the valve body (12) at least one receiving groove (36) is formed extending in the axial direction (23) of the bore (27) and running over the length of the bore (27), in which receiving groove the driver pin (29) is axially displaceable, **characterized in that** at least one T-shaped groove (30) is formed in the bore (27) in the valve body (12), which groove (30) has an insertion region (31) running in the axial direction (23) and a locking region (35) running in the circumferential direction (34) and adjoining the insertion region (31), wherein the driver pin (29) is introduced into the insertion region (31) through axial insertion and axially secured through subsequent rotation of the pin (25), wherein the receiving groove (36) is arranged offset at an angle (38) to the T-shaped groove (30).

2. The valve boring fitting according to claim 1, **characterized in that** a projection (39) which acts as a stop for the valve body (12) is configured in the head region (5) of the housing (2).

3. The valve boring fitting according to one of the preceding claims, **characterized in that** a guide bore (21) for receiving the valve body (12) is formed in the housing (2) starting from the pipe assembly region (6).

4. The valve boring fitting according to claim 3, **characterized in that** the valve body (12) has at least one seal (20) which is arranged on the outside of the valve body (12) and interacts with the guide bore (21) in the housing (2).

5. The valve boring fitting according to one of the preceding claims, **characterized in that** the valve body (12) and the cutting tool (13) are configured in one piece.

## Revendications

1. Robinet auto-perceur à soupape (1) destiné à être installé sur un tube (4), le robinet auto-perceur à soupape (1) comprenant :
un carter (2) qui comporte un tronçon principal (3) avec une zone de tête (5) et une zone de montage sur le tube (6), ainsi qu'un tronçon de dérivation (7) pour un fluide sortant du tube (4) percé ;
un couvercle de carter (8) qui peut être vissé sur le carter (2) au moyen d'un filetage (9) disposé sur la zone de tête (5) du carter (2) ;
un corps de soupape (12) avec un outil de coupe (13), le corps de soupape (12) étant disposé dans le tronçon principal (3) du carter (2) de façon déplaçable dans la direction axiale (23),
le couvercle de carter (8) comportant un élément de transmission de force (24) au moyen duquel le couvercle de carter (8) peut être couplé au corps de soupape (12) et le corps de soupape (12) peut être déplacé au moyen du couvercle de carter (8), l'élément de transmission de force (24) étant constitué en tant que broche (25) qui est disposée de façon centrée dans le couvercle de carter (8) et qui dépasse du couvercle de carter (8) jusque dans l'intérieur du carter (2), un alésage (27) étant constitué dans le corps de soupape (12) et correspondant avec la broche (25), la broche (25) comportant, sur son côté (28) éloigné du couvercle de carter (8), au moins un goujon d'entraînement (29), au moins une rainure de réception (36), s'étendant dans la direction axiale (23) de l'alésage (27) et placée sur la longueur de l'alésage (27), étant constituée dans l'alésage (27) dans le corps de soupape (12), rainure dans laquelle le goujon d'entraînement (29) peut être déplacé axialement, **caractérisé en ce que**, dans l'alésage (27) dans le corps de soupape (12), il est constitué au moins une rainure (30) en forme de T, laquelle rainure (30) comporte une zone d'introduction (31) placée dans la direction axiale (23) et comporte une zone d'arrêt (35) qui est placée dans la direction circonférentielle (34) et est contigüe à la zone d'introduction (31), le goujon d'entraînement (29) étant intégré par insertion axiale dans la zone d'introduction (31) et étant bloqué axialement par une rotation ultérieure de la broche (25), la rainure de réception (36) étant disposée de façon décalée en formant un angle (38) avec la rainure (30) en forme de T.

2. Robinet auto-perceur à soupape selon la revendication 1, **caractérisé en ce que**, dans la zone de tête (5) du carter (2), il est constitué une saillie (39) qui agit en tant que butée pour le corps de soupape (12).

3. Robinet auto-perceur à soupape selon l'une des revendications précédentes, **caractérisé en ce que**, dans le carter (2), en partant de la zone de montage sur le tube (6), il est constitué un alésage de guidage (21) destiné à recevoir le corps de soupape (12).

4. Robinet auto-perceur à soupape selon la revendication 3, **caractérisé en ce que** le corps de soupape (12) comporte au moins un joint d'étanchéité (20) qui est disposé sur le côté extérieur du corps de soupape (12) et coopère avec l'alésage de guidage (21) dans le carter (2).

5. Robinet auto-perceur à soupape selon l'une des revendications précédentes, **caractérisé en ce que** le corps de soupape (12) et l'outil de coupe (13) sont constitués d'un seul tenant.
